# EUROPEAN PATENT APPLICATION

(11) **EP 4 671 474 A1**
(43) Date of publication of application: **31.12.2025**
(21) Application number: 23924232.4
(22) Date of filing: 15.12.2023
(51) Int. Cl.: E05B 85/18, E05B 49/00

(54) **VEHICLE DOOR OPENING/CLOSING OPERATION DEVICE**

(30) Priority: 22.02.2023 JP 2023026529
(71) Applicant: Alpha Corporation, Yokohama-shi, Kanagawa 236-0004 (JP)
(72) Inventor: TOYAMA,Takao, Yokohama-shi, Kanagawa 236-0004 (JP); ONO,Takashi, Yokohama-shi, Kanagawa 236-0004 (JP); NISHIZUKA,Mitsuo, Yokohama-shi, Kanagawa 236-0004 (JP)
(74) Representative: Mewburn Ellis LLP
(86) International application number: PCT/JP2023/045129
(87) International publication number: WO 2024/176588

(57) **Abstract**

Provided is a vehicle door opening/closing operation device that can allow for simple wiring and expand a detection range.

The vehicle door opening/closing operation device 2 according to this invention is a vehicle door opening/closing operation device 2 for opening and closing a door 1 for a vehicle, the vehicle door opening/closing operation device 2 being attached to a door opening 10a provided in an outer panel 10 of the door 1, the vehicle door opening/closing operation device 2 including a frame body 5 having a frame body opening 51, the frame body 5 being attached to the door opening 10a so as to appear outside the door 1; and a receiver 80 fixedly provided to the door 1 and disposed along the frame body opening 51 or along the door opening 10a, the receiver 80 being configured to receive authentication information from a portable device or medium carried by a user.

## Description

### FIELD OF THE INVENTION

This invention relates to a vehicle door opening/closing operation device used for opening and closing a vehicle door.

### BACKGROUND OF THE INVENTION

A conventionally used vehicle door opening/closing operation device for this type can include, for example, the structure disclosed in the following Patent Literature 1. Patent Literature 1 describes a handle assembly that can accommodate a door handle. The door handle has a built-in NFC module, and when a user approaches the door with the user having an NFC cell phone, the door handle appears outside and the user can open and close the door. The entire vehicle is also locked when the NFC cell phone is placed close to the door handle after the vehicle is turned off.

### CITATION LIST

### Patent Literatures

[Patent Literature 1] Chinese Patent Application Publication No. 108547523 A1

### SUMMARY OF THE INVENTION

In the conventional device described in Patent Literature 1, the NFC module (receiver) is placed in the door handle (movable portion). Thus, if the receiver is placed in the movable portion, wiring for the receiver becomes cumbersome. Further, since the movable portion is a relatively small component, only a relatively small receiver can be placed in the movable portion. Therefore, the detection or communication range of the receiver is narrower in the conventional device.

This invention has been made to solve the problems as described above, and one of its objects is to provide a vehicle door opening/closing operation device that can allow for simple wiring and expand the detection range.

In an embodiment, this invention relates to a vehicle door opening/closing operation device for opening and closing a door for a vehicle, the vehicle door opening/closing operation device being attached to a door opening provided in an outer panel of the door, the vehicle door opening/closing operation device comprising a frame body having a frame body opening, the frame body being attached to the door opening so as to appear outside the door, and a receiver fixedly provided to the door and disposed along the frame body opening or along the door opening, the receiver being configured to receive authentication information from a portable device or medium carried by a user.

According to an embodiment of the vehicle door opening/closing operation device of this invention, the receiver configured to receive authentication information from the portable device or medium carried by the user is fixedly provided to the door and is disposed along the frame body opening of the frame body attached to the door opening so as to appears outside the door or along the door opening, which thus can allow for simple wiring and expand the detection range.

### BRIEF DESCRIPTION OF THE DRAWINGS

FIG. 1 is a front view illustrating a vehicle door opening/closing operation device according to Embodiment 1 of this invention, which is attached to a door for a vehicle;
FIG. 2 is a cross-sectional view taken along the line A-A in FIG. 1;
FIG. 3 is a cross-sectional view taken along the line B-B in FIG. 1;
FIG. 4 is a front view illustrating the vehicle door opening/closing operation device in FIG. 1 alone;
FIG.5 is a rear view illustrating the vehicle door opening/closing operation device in FIG. 4;
FIG. 6 is a plane view illustrating the vehicle door opening/closing operation device in FIG. 4;
FIG. 7 is a cross-sectional view taken along the line C-C in FIG. 6;
FIG. 8 is a front view illustrating a vehicle door opening/closing operation device according to Embodiment 2 of this invention, which is attached to a door for a vehicle; and
FIG. 9 is a cross-sectional view of a vehicle door opening/closing operation device according to Embodiment 3 of this invention.

### DETAILED DESCRIPTION OF THE INVENTION

Hereinafter, embodiments of the invention will be specifically described with reference to the drawings. The invention is not limited to each embodiment, and components can be modified and embodied without departing from the spirit of the invention. Further, various inventions can be formed by appropriately combining a plurality of components disclosed in each embodiment. For example, some components may be removed from all of the components shown in the embodiments. Furthermore, the components of different embodiments may be optionally combined.

### Embodiment 1.

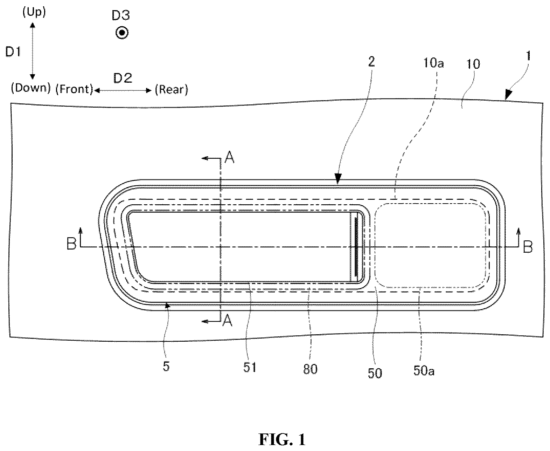

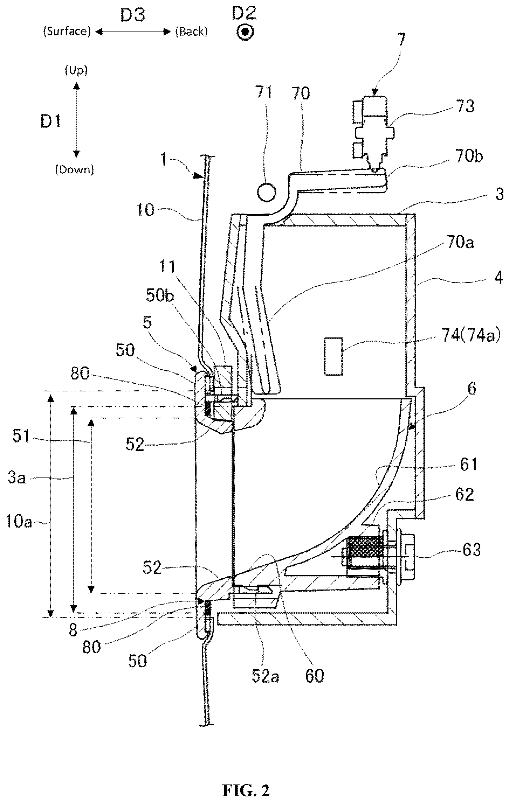

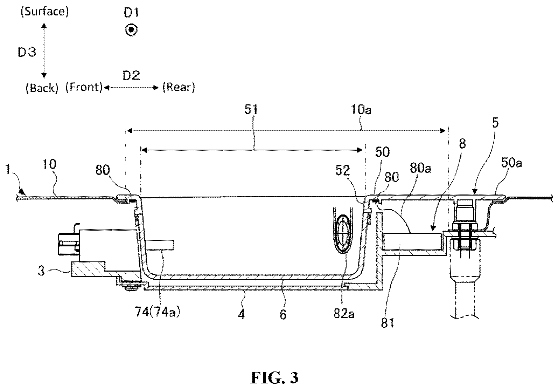

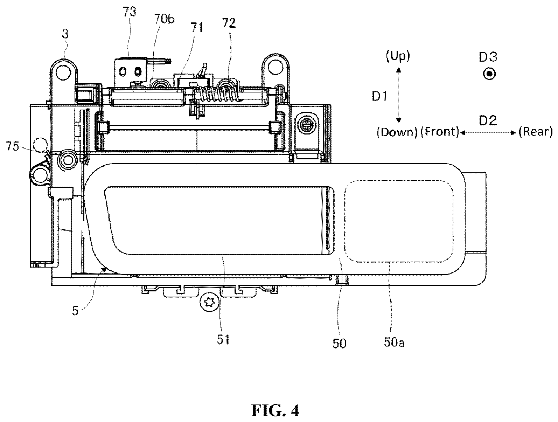

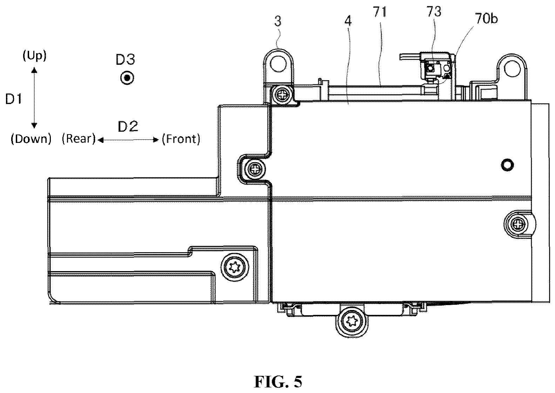

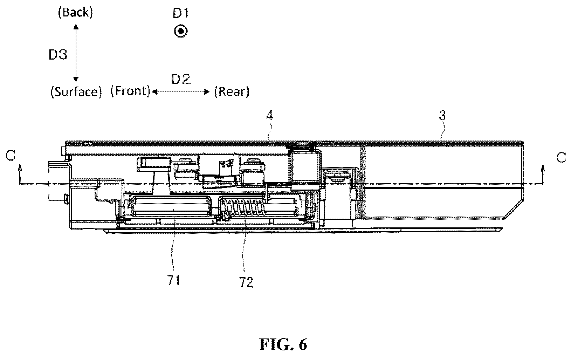

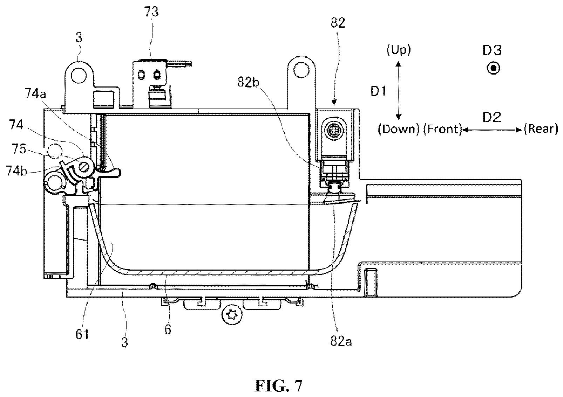

FIG. 1 is a front view illustrating a vehicle door opening/closing operation device 2 according to Embodiment 1 of this invention, which is attached to a door 1 for a vehicle, FIG. 2 is a cross-sectional view taken along the line A-A in FIG. 1, and FIG. 3 is a cross-sectional view taken along the line B-B in FIG. 1. FIG. 4 is a front view illustrating the vehicle door opening/closing operation device 2 in FIG. 1 alone, FIG.5 is a rear view illustrating the vehicle door opening/closing operation device 2 in FIG. 4, FIG. 6 is a plane view illustrating the vehicle door opening/closing operation device 2 in FIG. 4, and FIG. 7 is a cross-sectional view taken along the line C-C in FIG. 6.

Hereinafter, the configuration of each portion of the vehicle door opening/closing operation device 2 may be described using the terms: an up-down direction D1, a front-rear direction D2, and surface-back direction D3, as well as related terms such as upper, lower, front, rear, surface and back. These terms are based on the orientation of the vehicle door opening/closing operation device 2 attached to the door 1 for the vehicle as shown in FIG. 1. The up-down direction D1, the front-rear direction D2, and the surface-back direction D3 may be orthogonal to one another. The up-down direction D1 may extend in a height direction (vertical direction) of the vehicle, the front-rear direction D2 may extend in a front-rear direction of the vehicle, and the surface-back direction D3 may extend in a width direction of the vehicle. With respect to the surface-back direction D3, the surface side may be the outer side in the vehicle width direction, and the back side may be the inner side in the vehicle width direction. More generally, the up-down direction D1, the front-back direction D2, and the surface-back direction D3 may be referred to as a first direction, a second direction, a third direction, and so on.

The door 1 for the vehicle is attached to a vehicle body (not shown) so as to be movable relative to the vehicle body. The door 1 may have an outer panel 10 shown in FIG. 1 and an interior (not shown). The outer panel 10 may be referred to as a door panel. The outer panel 10 can be a metal plate such as painted steel plate. Between the outer panel 10 and the interior is a door interior space having a predetermined thickness in the surface-back direction D3. The outer panel 10 is provided with a door opening 10a. The door opening 10a can communicate the outer side of the door 1 with the interior space of the door. As particularly shown in FIG. 1, the door opening 10a can have a rectangular shape with longer extension in the front-rear direction D2 than in the surface-back direction D1.

The vehicle door opening/closing operation device 2 is a device for opening and closing the door 1, which is attached to the door opening 10a as shown in FIGS. 1 to 3. The vehicle door opening/closing operation device 2 has a bracket 3, a cover 4, a frame body 5, a base 6, a latch release mechanism 7, and a lock operation mechanism 8.

As particularly shown in FIG. 2, the bracket 3 is a member that is disposed inside the door 1. The bracket 3 is fixedly provided to the outer panel 10 of the door 1. The bracket 3 as a whole has a box shape with an opening on the back side. The cover 4 is removably attached to the back side of the bracket 3 to close the back side opening of the bracket 3. The bracket 3 can support the frame body 5, the base 6, the latch release mechanism 7, and the lock operation mechanism 8. The lower surface side of the bracket 3 is provided with a bracket opening 3a that communicates the inside with the outside of the bracket 3. The Bracket 3 can be provided so that the bracket opening 3a overlaps with the door opening 10a.

The frame body 5 is a member that is attached to the door opening 10a so that the frame body 5 appears on the outside of the door 1. The frame body 5 can be fixedly provided to the outer panel 10 of the door 1. The frame body 5 may sometimes be referred to as an escutcheon. The frame body 5 can be a plastic member.

As particularly shown in FIG. 1, the frame body 5 may have a design face 50 that appears on the outside of the door 1 and a frame body opening 51 provided on the design face 50. The frame body opening 51 may be smaller than the door opening 10a. The center position of the frame body opening 51 with respect to the front-rear direction D2 may be shifted from the center position of the door opening 10a with respect to the same direction. In the illustrated embodiment, the center position of the frame body opening 51 is shifted toward the front side (one end side in the front-rear direction D2) from the center position of the door opening 10a. The design face 50 in a region on the rear side of the frame opening 51 (other end side in the front-rear direction D2) can be referred as a covered portion 50a.

As particularly shown in FIGS. 2 and 3, the frame body 5 may further have an extension 52 that extends from the inner edge of the design face 50 toward the back side. The tip of the extension 52 may be located on the back side beyond the end of the outer panel 10 of the door 1.

Although the fixing of the frame body 5 to the door 1 is achieved by any method, in the illustrated embodiment, protrusions 50b, 52a protruding from the back face of the design face 50 and from the tip of the extension 52 are engaged with the bracket 3 and base 6, respectively, whereby the frame body 5 is fixed to the door 1. As in the illustrated embodiment, a shim 11 may be provided between the back face of the outer panel 10 of the door 1 and the bracket 3, and the protrusion 50b protruding from the back face of the design face 50 may be passed through the shim 11.

The base 6 is a member that is attached to the door opening 10a so that the base 6 is located inside the door 1. The base 6 can be a plastic member. The base 6 can be fixedly disposed to the outer panel 10 of the door 1. In the illustrated embodiment, the base 6 is fixedly disposed to the inside of the bracket 3. The base 6 is disposed at the lower portion within bracket 3 so that the base 6 extends to a range where the user outside the vehicle can see through the frame body opening 51. The base 6 may have an end 60 adjacent to the tip of the extension 52 on the lower side of the frame body 5 and a wall 61 extending from the end 60 toward the back side. The end 60 may be engaged with the projection 52a protruding from the tip of the extension 52. The wall 61 extends upwardly from the end 60 toward the back side. As shown in FIG. 2, the wall 61 may be arc-shaped. The lower portion of the back face of the wall 61 has a fixed portion 62. The fixed portion 62 can be a cylindrical body whose inner wall is provided with a thread. Although the fixing of the base 6 to the door 1 is achieved in any fixing direction, in the illustrated embodiment, the base 6 is fixed to the door 1 through the bracket 3 by attaching a bolt 63 to the fixed portion 62 through the bracket 3.

The latch release mechanism 7 is a mechanism for releasing a latch of the door 1 to the vehicle body. The latch release mechanism 7 may have any configuration, but the illustrated latch release mechanism 7 has a first latch release lever 70, a first rotary shaft 71, an urging means 72, a latch release switch 73, a second latch release lever 74 and a second rotary shaft 75.

The first latch release lever 70 is disposed inside the door 1. The first latch release lever 70 is pivotably provided around the first rotary shaft 71 (see FIGS. 2 and 4, etc.) provided at the upper portion of the bracket 3. The first latch release lever 70 has a plate-shaped first operating portion 70a and first acting portion 70b that are integral with each other. The first operating portion 70a is located inside the bracket 3, and the first acting portion 70b is located outside (on the upper portion) of the bracket 3. The first rotary shaft 71 is located between the first operating portion 70a and the first acting portion 70b. The first latch release lever 70 is urged by the urging means 72 (see FIG. 4, etc.) in the direction where the first operating portion 70a is away from the inner wall on the surface side of the bracket 3. The urging means 72 can be a wound spring provided around the outer circumference of the first rotary shaft 71. The first acting portion 70b is always pressed against the latch release switch 73 by the urging force of the urging means 72. The first operating portion 70a is disposed to receive a pulling operation toward the surface side by the fingertips of the user inserted into the door opening 10a. This pulling operation against the first operating portion 70a causes the first latch release lever 70 to be rotated, so that the first acting portion 70b is separated from the latch release switch 73. When the latch release switch 73 detects this separation of the first acting portion 70b, a signal is input from the latch release switch 73 to an actuator (not shown), thereby releasing the latch of the door 1.

The first latch release lever 70 is intended to be used during normal times when the vehicle's power source is active (power can be supplied to the latch release switch 73 and the actuator). In contrast, the second latch release lever 74 is intended to be used in abnormal times such as a dead battery.

As particularly shown in FIG. 7, the second latch release lever 74 is pivotably provided around a second rotary shaft 75 located on the outside of the side wall of the bracket 3. In the illustrated embodiment, the second rotary shaft 75 is disposed outside the side wall on the front side of the bracket 3. The second latch release lever 74 has a second operating portion 74a and a second acting portion 74b that are integral with each other. The second operating portion 74a is provided at the side wall of the bracket 3 and is inserted into an internal space of the bracket 3 through an insertion hole. The second acting portion 74b is connected to the latch by a wire (not shown). The second latch release lever 74 is urged by a spring (not shown), or by a wire, so that the second operating portion 74a is directed upward. The second operating portion 74a is pushed down by the fingertips of the user inserted into the door opening 10a, whereby the rotation of the second latch release lever 74 can be transmitted through the wire to the latch, such that the latch can be released.

The lock operation mechanism 8 is for locking and unlocking the door lock of the door 1. The lock operation mechanism 8 has a receiver 80, a lock control unit 81, and a lock operation unit 82.

The receiver 80 is for receiving authentication information from a portable device or medium carried by the user. Examples of the portable devices or media include, for example, smart phones, cellular phones, or cards with chips containing authentication information. The receiver 80 is also referred to as an antenna. The receiver 80 and the portable device or medium is communicated with each other by any communication method. Examples of the communication method includes NFC (near field communication), RFID, Bluetooth (registered trademark), and wireless LAN. The receiver 80 according to this embodiment can receive authentication information from a portable device or medium via NFC. In this respect, the receiver 80 may be referred to as the NFC antenna.

The receiver 80 is connected to the lock control unit 81 through a harness 80a. The lock control unit 81 is configured to lock and/or unlock the door lock based on the authentication information received by the receiver 80. The user's authentication information is previously registered in the lock control unit 81. In this regard, the lock control unit 81 may be referred to as an authentication module or NFC module. When the authentication information received by the receiver 80 matches the authentication information previously registered in the lock control unit 81, the lock control unit 81 can input lock and/or unlock signals to a lock actuator (not shown) to lock and/or unlock the door lock. If the authentication information matches when the door lock is locked, the lock control unit 81 can input an unlock signal to the lock actuator to unlock the door lock. Similarly, the lock control unit 81 can input the lock signal to the lock actuator to lock the door lock if the authentication information matches when the door lock is unlocked. The lock control unit 81 may include: an authentication unit that authenticates the authentication information; and an unlocking unit that inputs lock and/or unlock signals to the lock actuator based on the authentication by the authentication unit. Although the figure shows these authentication unit and locking unit as if they are a single unit, they may be separate units from each other. For example, the locking and unlocking units may be configured by a control unit on the vehicle-mounted device side.

Although the lock control unit 81 can be placed at any position, in the illustrated embodiment, the lock control unit 81 is fixed to the bracket 3 on the back side of the covered portion 50a of the frame body 5 (design face 50 in the region behind the frame body opening 51).

The receiver 80 according to this embodiment is fixedly provided to the door 1 and is disposed along the frame body opening 51 of the frame body 5 which is attached to the door opening 10a so as to appear outside of the door 1. This can allow for simpler wiring and broad the detection range as compared with the conventional configuration in which the receiver 80 is provided in the movable portion.

It may be understandable that the phrase "the receiver 80 is fixedly provided to the door 1" means that the receiver 80 is fixed to a member fixedly provided to the door 1. In the illustrated embodiment, the receiver 80 is fixedly provided to the door 1 by being attached to the frame body 5. The receiver 80 may be attached onto the surface of the frame body 5, but in the illustrated embodiment it is attached to the back face of the frame body 5. More specifically, as particularly shown in FIG. 2, the receiver 80 is attached to the back face of the design face 50. The receiver 80 is disposed along the outer edge of the extension 52.

In the illustrated embodiment, the receiver 80 has an annular shape that is larger than the frame body opening 51 and is disposed along the outer circumference of the frame body opening 51. The receiver 80 may have other shapes, such as a U-shape. It is also understandable that the receiver 80 has an annular shape that is smaller than the door opening 10a, and is disposed at least partially along the door opening 10a.

If the receiver 80 is displaced along at least one of the edges forming the frame body opening 51, it is understandable that the receiver 80 extends along the outer circumference of the frame body opening 51.

The receiver 80 extending along the outer circumference of the frame body opening 51 may include, for example, the receiver 80 being disposed along one of the edges of the frame body opening 51 extending in the up-down direction D1. When it is disposed along the edge of the design face 50, for example, certain indication indicating the presence of the detection region of the receiver 80 is provided on the design face 50, so that the user can see at a glance where the portable device or medium is held up, leading to improved convenience.

The receiver 80 extending along the outer circumference of the frame body opening 51 may include the receiver 80 being disposed along one of the edges of the frame body opening 51 extending in the front-rear direction D2. In this case, by setting the detection region of the receiver 80 to overlap with the frame body opening 51, authentication can be performed by simply holding a portable device or medium roughly around the frame body opening 51, even without any indication of the presence of the detection region, thereby improving convenience.

In addition to communication of authentication information with the receiver 80 via NFC, the portable device or medium carried by the user may function as an electronic key that communicates with a vehicle-mounted device (not shown) via a communication means other than NFC (such as LF or RF radio waves). The electronic key that communicates with the vehicle-mounted device via the other communication means may be integral or separate from the portable device or medium that communicates authentication information via NFC. The electronic key may be more commonly referred to as a portable instrument.

The electronic key stores a predetermined authentication ID. The vehicle-mounted devise transmits request signals to the vehicle's surroundings via an antenna (not shown). When the electronic key receives a request signal from the vehicle-mounted device, it transmits the authentication ID stored in the electronic key to the vehicle-mounted device. The vehicle-mounted devise can compare the received authentication ID with the previously stored authentication ID. The vehicle-mounted devise may include a lock control unit 81 or another control unit.

The lock operating portion 82 can be used with the electronic key to lock and/or unlock the door lock. The lock operating portion 82 has a pressing portion 82a (see FIG. 3 and FIG. 7, etc.) and a pressing switch 82b (see FIG. 4 and FIG. 7, etc.). The pressing portion 82a is a portion that is pressed by the user. The pressing portion 82a can be referred to as a button. The pressing switch 82b is a sensor for detecting the press of the pressing portion 82a. The pressing switch 82b inputs a press detection signal to the vehicle-mounted device when it detects the press of the pressing portion 82a. When the vehicle-mounted devise detects the press detection signal from the pressing switch 82b when the authentication ID received from the electronic key matches the previously stored authentication ID, it can input locking and/or unlocking signals to a lock actuator (not shown) to lock and/or unlock the door lock. The vehicle-mounted devise can unlock the door lock by inputting an unlock signal to the lock actuator when the door lock is locked, and can lock the door lock by inputting a lock signal to the lock actuator when the door lock is unlocked.

The pressing portion 82a and the pressing switch 82b can be disposed at any position, but the pressing portion 82a may be provided inside the door 1, as in the illustrated embodiment. More specifically, the pressing portion 82a may be disposed on the rear side of the bracket 3 that is opposite to the second latch release lever 74 in the front-rear direction D2. More specifically, the pressing portion 82a may be disposed at an opening provided at the top panel of the bracket 3. The pressing switch 82b may be disposed away from the pressing portion 82a, or it may be directly connected to the pressing portion 82a as shown in FIG. 7.

The vehicle-mounted device may unlock the door 1 and release the latch in response to the pulling operation of the first latch release lever 70 described above when the authentication ID received from the electronic key matches the previously stored authentication ID. In other words, when the latch release switch 73 detects the separation of the first acting portion 70b of the latch release mechanism 7, an operation detection signal is input from the latch release switch 73 to the vehicle-mounted devise, and when the authentication ID received from the electronic key matches the previously stored authentication ID, the vehicle-mounted device may input the unlock signal to the lock actuator (not shown) to unlock the door lock when the operation detection signal from the latch release switch 73 is detected, and may input the signal to the latch actuator (not shown) to release the latch of the door 1.

Locking and/or unlocking the door lock and releasing the latch during normal times when the power sources of the vehicle and electronic key are active can be performed as follows:
(1) unlocking operation (using the electronic key): pressing operation of the pressing portion 82a or pulling operation of the first latch release lever 70 with verification of the authentication ID of the electronic key;
(2) unlocking operation (using NFC): holding up the portable device or media near the receiver 80;
(3) latch release: pulling operation of the first latch release lever 70;
(4) locking operation (using the electronic key): pressing of the pressing portion 82a with verification of the authentication ID of the electronic key; and
(5) locking operation (using NFC): holding up the portable device or media over the receiver 80.

During normal times when the power sources of the vehicle and electronic key are active, the user has the following first and second alternatives. In other words, as a first alternative, the user can cause the vehicle to send a request signal by operating the lock control unit 82 and lock/unlock the door lock using hands-free operation with the electronic key possessed by the user. As a second alternative, it is considered that the user locks/unlocks the door lock using the receiver 80. For example, the authentication information can be lent via a smart phone as a portable device when multiple people want to share the vehicle. The users can also lock/unlock the door lock by placing their smart phones or emergency card keys provided with an NFC antenna in the wallet in case where they do not have their electronic keys due to losses of their electronic keys.

Locking and/or unlocking the door lock and releasing the latch during an emergency, such as when the battery in the electronic key is dead, can be performed as follows: When the portable device or medium is integrated with the electronic key, no power may be required for NFC.
(1) unlocking operation (using NFC): holding up the portable device or medium over the receiver 80;
(2) latch release: pulling operation of the first latch release lever 70;
(3) locking operation (using NFC): holding up the portable device or medium over the receiver 80.

Locking and/or unlocking the door lock and releasing the latch in the event of an emergency, such as when the battery of the vehicle is dead, can be performed as follows:
(1) unlocking operation (using mechanical key): inserting a mechanical key (not shown) into a key cylinder (not shown) to unlock the door lock;
(2) latch releasing: rotational operation of the second latch release lever 74; and
(3) locking operation (using mechanical key): inserting the mechanical key into the key cylinder to lock the door lock.

In other words, in the event of the emergency, such as when battery of the electronic key or the vehicle is dead, the user cannot use hands-free operation with the electronic key. As an alternative, the user has the following first and second alternatives. In other words, as a first alternative, the user can hold up the portable device or medium over the receiver 80 and lock/unlock the door lock through authentication using NFC. This is because authentication using NFC with the receiver 80 has lower power consumption. The first alternative can be taken when the power source of the vehicle is active. As a second alternative, the user can also use a mechanical key (physical key) to lock/unlock the door lock. The key cylinder is not shown, but it can be disposed, for example, behind the covered portion 50a. The covered portion 50a may be attachable/detachable. This second alternative can also be taken when the battery of the vehicle is dead.

The receiver 80 and the key cylinder may be provided in both doors of the vehicle (driver side door and passenger side door), respectively, but the specifications may vary for the driver side door and passenger side door. That is, only one of the receiver 80 and the key cylinder may be provided on one door, and only the other of the receiver 80 and the key cylinder may be provided on the other door. For example, the driver side door may be provided with the receiver 80 while it may not be provided with the key cylinder, and the passenger side door may be provided with the key cylinder while it may not be provided with the receiver 80. By thus changing the specifications for the driver side door and the passenger side door, there is an advantage that the vehicle door opening/closing operation device 2 (handle) can be minimized (in terms of design and/or cost).

### Embodiment 2.

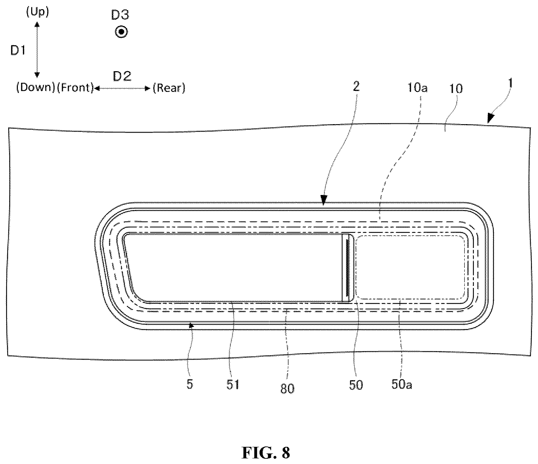

FIG. 8 is a front view illustrating a vehicle door opening/closing operation device 2 according to Embodiment 2 of this invention, which is attached to a door 1 for a vehicle. While Embodiment 1 has disclosed that the receiver 80 is disposed along the frame body opening 51, as shown in FIG. 8, the receiver 80 may be disposed along the door opening 10a. In FIG. 8, the receiver 80 is disposed inside the door opening 10a, but depending on the size of the frame body 5 and other installation conditions, the receiver 80 may be disposed outside the door opening 10a. Other configurations are the same as those of Embodiment 1.

### Embodiment 3.

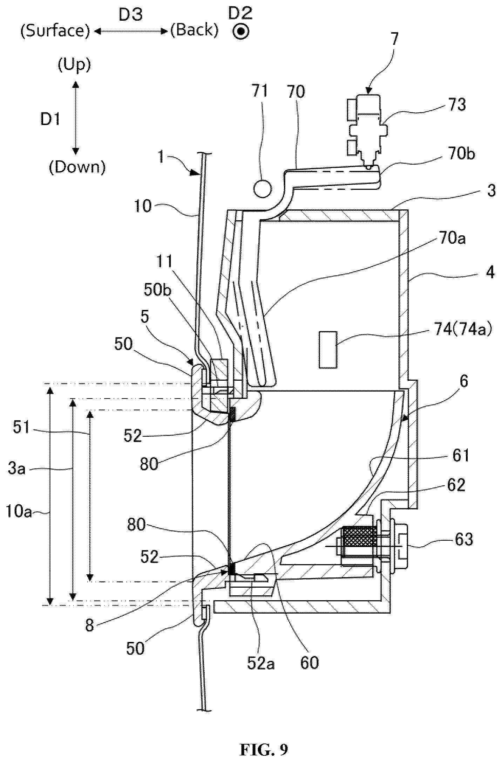

FIG. 9 is a cross-sectional view of a vehicle door opening/closing operation device 2 according to Embodiment 3 of this invention. FIG. 9 illustrates a cross section of the vehicle door opening/closing operation device 2 at the position of the line A-A in FIG. 1. In Embodiment 1, the receiver 80 has been described as being attached to the frame body 5. This has the advantage that by placing the receiver 80 outside the door 1, the communication between the receiver 80 and the portable device or medium is less likely to be prevented by the metal outer panel 10 of the door 1. However, as shown in FIG. 9, the receiver 80 may be attached to a member inside the door 1 so that it is located inside the door opening 10a. With this arrangement, the communication between the receiver 80 and the portable device or medium is less likely to be prevented by the outer panel 10 of the metal door 1. The positioning of the receiver 80 inside the door opening 10a can also be understood as the positioning of the receiver 80 in the internal region of the door opening 10a when the door opening 10a is viewed along the surface-back direction D3. As shown in FIG. 9, the receiver 80 may be attached to the base 6. The receiver 80 can be attached to the end on the surface side of the base 6. Other configurations are the same as those of the embodiments 1 and 2.

In addition, while Embodiments 1 to 3 have disclosed that the lever (first latch opening lever 70) for releasing the latch of the door 1 is disposed inside the door 1, this invention can also be applied to vehicle door opening/closing operation device 2 having various latch opening levers or handles. For example, even in a vehicle door opening/closing operation device 2 in which the latch release handle is stored inside the frame body opening 51, the receiver 80 for receiving authentication information can be disposed along the frame body opening 51 of the frame body 5 or the door opening 10a.

Further, while Embodiments 1 to 3 have disclosed that the authentication information received by the receiver is used for locking and unlocking the door lock, the authentication information can be used in any manner. For example, in a vehicle door opening/closing operation device 2 in which the latch release handle is stored inside the frame body opening 51, the latch release handle may be extended to the outside from the frame body opening when the authentication information received by the receiver 80 matches the authentication information previously registered in the authentication module.

While the preferred embodiments of the invention have been described above in detail with reference to the drawings, the present invention is not limited to such embodiments. It is obvious that a person skilled in the art to which this invention belongs can arrive at various variations or modifications in the scope of the technical idea recited in the claims, and it is understood that they also belong to the technical scope of this invention.

The invention described herein may also be described as follows:
[1] A vehicle door opening/closing operation device for opening and closing a door for a vehicle, the vehicle door opening/closing operation device being attached to a door opening provided in an outer panel of the door, the vehicle door opening/closing operation device comprising:
   a frame body having a frame body opening, the frame body being attached to the door opening so as to appear outside the door; and
   a receiver fixedly provided to the door and disposed along the frame body opening or along the door opening, the receiver being configured to receive authentication information from a portable device or medium carried by a user.
[2] The vehicle door opening/closing operation device according to [1], wherein the receiver is attached to the frame body.
[3] The vehicle door opening/closing operation device according to [2], wherein the receiver is attached to a back face of the frame body.
[4] The vehicle door opening/closing operation device according to [1], wherein the receiver is attached to a member inside the door so that the receiver is located inside the door opening.
[5] The vehicle door opening/closing operation device according to any one of [1] to [4], further comprising a lock control unit for locking and/or unlocking a door lock based on the authentication information received by the receiver.

### Description of Reference Numerals

1: door
10: outer panel
10a: door opening
2: vehicle door opening/closing operation device
5: frame body
51: frame body opening
80: receiver
81: lock control unit

## Claims

1. A vehicle door opening/closing operation device for opening and closing a door for a vehicle, the vehicle door opening/closing operation device being attached to a door opening provided in an outer panel of the door, the vehicle door opening/closing operation device comprising:
a frame body having a frame body opening, the frame body being attached to the door opening so as to appear outside the door; and
a receiver fixedly provided to the door and disposed along the frame body opening or along the door opening, the receiver being configured to receive authentication information from a portable device or medium carried by a user.

2. The vehicle door opening/closing operation device according to claim 1, wherein the receiver is attached to the frame body.

3. The vehicle door opening/closing operation device according to claim 2, wherein the receiver is attached to a back face of the frame body.

4. The vehicle door opening/closing operation device according to claim 1, wherein the receiver is attached to a member inside the door so that the receiver is located inside the door opening.

5. The vehicle door opening/closing operation device according to any one of claims 1 to 4, further comprising a lock control unit for locking and/or unlocking a door lock based on the authentication information received by the receiver.
